# EUROPÄISCHE PATENTSCHRIFT

(11) **EP 0 532 859 B1**
(45) Veröffentlichungstag und Bekanntmachung des Hinweises auf die Patenterteilung: **23.11.1994**
(21) Anmeldenummer: 92112445.9
(22) Anmeldetag: 21.07.1992
(51) Int. Cl.: E05C 19/10

(54) **Riegelverschluss**
Locking bolt
Pêne de verrouillage

(30) Priorität: 25.07.1991 DE 9109211 U
(43) Veröffentlichungstag der Anmeldung: 24.03.1993
(73) Patentinhaber: KARL HILDEBRAND GmbH, D-40699 Erkrath (DE)
(72) Erfinder: Kockel, Wolfgang, W-4006 Erkrath (DE); Woitke, Volker, W-5620 Velbert 1 (DE); van Hall, Heinz, W-5620 Velbert 15 (DE)
(74) Vertreter: Heim, Hans-Karl, Dipl.-Ing.

(56) Entgegenhaltungen:
- DE-U- 9 005 764
- FR-A- 2 136 141
- US-A- 3 873 142

## Beschreibung

Die Erfindung betrifft einen Riegelverschluß, insbesondere für abklappbare Bordwände von Nutzfahrzeugen, gemäß dem Oberbegriff des Anspruchs 1.

Ein gattungsgemäßer Riegelverschluß ist aus dem DE-U-90 05 764 bekannt. Riegelhaken und Gegenhalter dieses Verschlusses weisen eine schräg zur Bewegungsrichtung des Riegels verlaufende Auflauffläche auf, die durch eine stufenförmige, in etwa senkrecht zur Bewegungsrichtung des Riegels verlaufende Anlagefläche unterbrochen ist. Wird der Verschluß bei gegen die Bordwand drückendem Ladegut geöffnet, erfolgt eine Blockierung, indem die Anlageflächen in Eingriff kommen. Eine vollständige Öffnung ist erst möglich, wenn durch das Ladegut kein Innendruck mehr auf die Bordwand ausgeübt wird und die Bordwand nahezu senkrecht gehalten wird.

Bei diesem bekannten Riegelverschluß ist die Blockiereinrichtung lediglich durch Anlageflächen im Riegelhaken bzw. im Gegenhalter gebildet, die relativ geringe Abmessungen aufweisen und durch die angrenzenden schrägen Auflaufflächen lediglich eine relativ instabile Unterbrechung des Öffnungsvorganges ermöglichen. Insbesondere wenn durch eine ruckartige Riegelbewegung der Verschluß geöffnet wird, besteht die Gefahr, daß der Riegelhaken nicht an den Auflaufflächen gleitet und deshalb auch keine Blockierung erfolgt.

Der Erfindung liegt die **Aufgabe** zugrunde, einen Riegelverschluß mit besonders sicherer Blockiereinrichtung zu schaffen, so daß in jedem Fall der Öffnungsvorgang unterbrochen wird, wenn infolge eines Innendruckes die Bordwand aus ihrer senkrechten Lage gebracht ist. Gleichzeitig soll am Riegelverschluß die Blockierstellung von außen möglichst deutlich sichtbar sein.

Erfindungsgemäß wird die Aufgabe durch die im Kennzeichen des Anspruchs 1 genannten Merkmale gelöst. Vorteilhafte und zweckmäßige Ausgestaltungen sind in den Unteransprüchen beansprucht sowie in der Figurenbeschreibung dargelegt.

Es ist ein Grundgedanke der Erfindung, die Elemente der Blockiereinrichtung entsprechend den zwei prinzipiellen Bewegungsrichtungen eines Riegels in einem Gegenhalter des erfindungsgemäßen Riegelverschlußes während der Entriegelung unter Innendruck auszubilden und anzuordnen. Ausgehend von einer Verriegelungsstellung führt der Riegel zunächst eine geradlinige Bewegung aus, um aus dem Eingriffsbereich von Deckflächenbereichen des Gegenhalters zu gelangen. Danach erfolgt eine transversale Bewegung, mit der der Riegel aus dem Gegenhalter herausgeführt wird. Diese nahezu rechtwinklige Riegelbewegung erfolgt bei Innendruck in einer ersten Phase des Öffnungsvorganges und führt mit Hilfe der erfindungsgemäßen Blockiereinrichtung zu einer Blockierstellung des Riegels relativ zum Gegenhalter.

Erfindungsgemäß weist die Blockiereinrichtung Rastelemente am Riegel auf, die in einer Verriegelungsstellung außerhalb des Gegenhalters angeordnet sind. Der erfindungsgemäß linear und transversal aus der Verriegelungsposition in eine Blockierstellung bewegbare Riegel wird bei Innendruck derart bewegt, daß die Rastelemente mit Außenflächen des Gegenhalters in Wirkverbindung gelangen.

Es ist vorteilhaft, wenn Deckflächenbereiche und/oder Bereiche einer den Riegel führenden Seitenwand eines gehäuseartigen, insbesondere quaderförmigen Gegenhalters als Aufnahmen für die Rastelemente des Riegels wirken. Dabei weist ein gehäuseartiger Gegenhalter Durchtrittsbereiche in der Deckflache auf, über die der Riegel einführbar ist.

Die Aufnahmen sind nahezu parallel und/oder radial versetzt zur Verriegelungsstellung des Riegels angeordnet, wobei ein T-förmiger Riegel mit einem Querbalken in Verriegelungsposition in einer nahezu rechtwinkligen Eckenausbildung des Gegenhalters gehalten ist. Die Rastelemente des linear und transversal bewegten Riegels können in entsprechend ausgebildete Aufnahmen des Gegenhalters insbesondere formschlüssig einrasten, so daß eine sichere und stabile Blockierstellung gewährleistet ist.

Indem die Rastelemente an einem Bereich des Riegels angeordnet sind, der außerhalb des Gegenhalters liegt, ist die Blockierstellung besonders sicher und gut zu erkennen. Der Innendruck kann dann beseitigt werden, um den Riegelverschluß vollständig und gefahrlos öffnen zu können.

Ein weiterer Vorteil besteht darin, daß die Aufnahmen am Gegenhalter besonders einfach ausgebildet sein können, da prinzipiell mindestens eine Außenwand bzw. Außenfläche des Gegenhalters als Aufnahme dient.

Eine besonders sichere Blockierfunktion weist ein Verschlußriegel auf, der Rastelemente am T-förmigen Riegel aufweist, die mit dem Querbalken Zusammenwirken. Die Aufnahmen sind durch eine Seitenwand und Deckflächenbereiche des Gegenhalters gebildet.

Ein wesentlicher Vorteil des erfindungsgemäßen Riegelverschlusses besteht in einer besonders sicheren Blockierung, sobald Ladungsdruck auf die Bordwand ausgeübt wird. Gleichzeitig kann diese Blockierstellung sofort und mit einfacher Handhabung aufgehoben werden, wenn kein Innendruck mehr ausgeübt wird.

Der Riegelverschluss ist besonders einfach aufgebaut und die Herstellung mit relativ geringem Aufwand verbunden. Bei Verwendung von überstehenden Rastelementen ist eine besonders sichere Blockierfunktion gewährleistet. Ein weiterer Vorteil besteht darin, daß aus der Lage der außerhalb des Gegenhalters angeordneten Rastelementen die Blockierung erkannt werden kann.

Wenn auch die Verwendung des Riegelverschlusses für abklappbare Bordwände das bevorzugte Anwendungsgebiet darstellt, besteht die Möglichkeit, den Verschluß auch beispielsweise bei Türen oder anderen verriegelbaren Einrichtungen zu verwenden, bei denen die Öffnung in zwei Phasen zweckmäßig erscheint und der Öffnungsspalt, der dem Abstand der Verriegelungsstellung und der Blockierstellung im Gegenhalter entspricht, vorteilhaft benutzt werden kann.

Die Erfindung wird nachstehend anhand einer Zeichnung weiter beschrieben. In dieser zeigen:
- Fig. 1a: eine schematische Draufsicht auf eine erste Ausführungsform eines erfindungsgemäßen Riegelverschlusses,
- Fig. 1b: eine Seitenansicht in schematischer Form,
- Fig. 1c: einen Schnitt entlang der Linie C-C gemäß Fig. 1a (nach 180° Drehung),
- Fig. 1d: einen Schnitt analog zur Fig. 1c nach linearer Öffnungsbewegung des Riegels,
- Fig. 1e: einen Schnitt analog zur Fig. 1c mit blockiertem Riegel,
- Fig. 2a: eine stark schematisierte Draufsicht auf einen erfindungsgemäßen Riegel mit L-förmigen Rastelementen,
- Fig. 2b: einen Schnitt entlang der Linie B-B gemäß Fig. 2c und
- Fig. 2c: eine Seitenansicht.

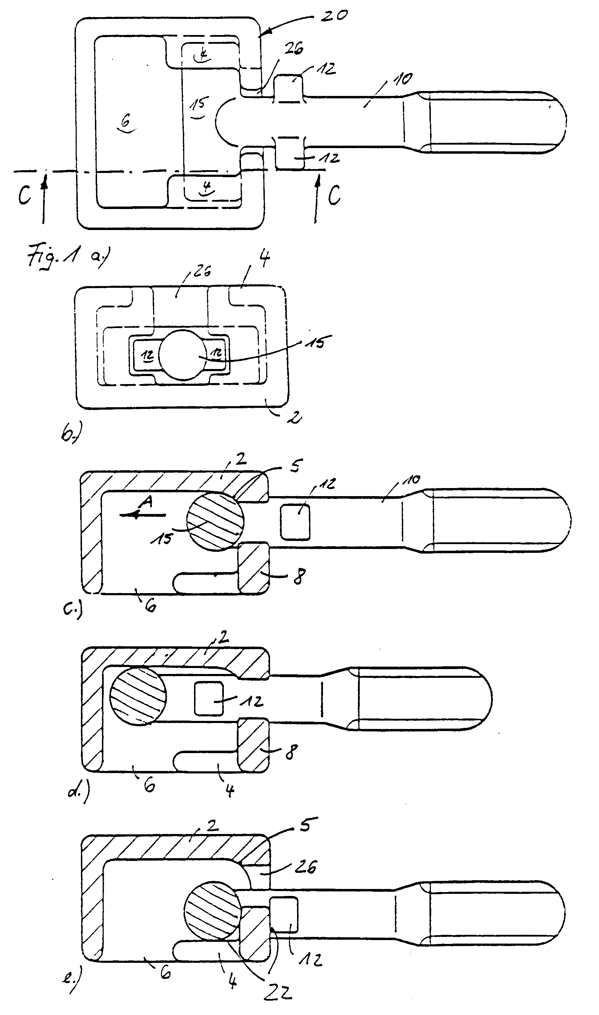

Der in Fig. 1a bis e dargestellte erfindungsgemäße Riegelverschluß besteht aus einem gehäuseartigen Gegenhalter 20 und einem T-förmigen Riegel 10, dessen Querbalken 15 kreiszylinderförmig ausgebildet ist.

Der Gegenhalter 20 ist mit einer Grundfläche 2 an einem festen Fahrzeugteil befestigt. Eine parallele Deckfläche 4 weist Durchtrittsbereiche 6 für den Ver- und Entriegelungsvorgang auf, bei denen der Riegel 10 mit Querbalken 15 und zwei beidseitig und parallel zum Querbalken 15 angeformten Rastelementen 12 in den Gegenhalter 20 ein- bzw. herausgeführt wird. In Verriegelungsstellung (Fig. 1a, b, c) wird der Querbalken 15 in einer kreisbogenförmigen Eckenausbildung 5 der Grundfläche 2 und einer Gehäusewand 8 gehalten. Die Gehäusewand 8 weist eine Öffnung 26 auf, in welcher der Riegel 10 mit den zwei Rastelementen 12, die etwa würfel- bzw. quaderförmig ausgebildet sind, geführt wird. Diese Öffnung 26 verjüngt sich stufenartig in Richtung Deckfläche 4 und geht in die Durchtrittsbereiche 6 über. Die Rastelemente 12 sind in einem der Wandstärke entsprechenden Abstand vom Querbalken 15 angeordnet. Ist während des Öffnungsvorganges eine Bordwand, an der der Riegel 10 befestigt ist, mit Druck beaufschlagt, beispielsweise von verrutschtem Ladegut, wird die lineare Riegelbewegung (Pfeil A, Fig. c) unterbrochen, so daß nicht die in Fig. 1d gezeigte Öffnungsstellung des Riegels erreicht wird, sondern infolge einer nahezu transversalen Riegelbewegung gelangt der Riegel in die Blockierstellung gemäß Fig. 1e.

In dieser Stellung sind die Elemente der erfindungsgemäßen Blockiereinrichtung - die Rastelemente 12 beiderseits des Riegels 10 und als Aufnahmen 22 die Außen- und Innenfläche der Gehäusewand 8 sowie die Deckfläche 4 - kraft- und/oder formschlüssig in Eingriff gebracht. Insbesondere aus Fig. 1e ist die Öffnungssperre der erfindungsgemäßen Blockiereinrichtung zu ersehen, die eine besonders hohe Sicherheit gegen ein gefahrvolles Abklappen von Bordwänden bietet.

Eine zweite Öffnungsphase des Verschlußriegels kann erst eingeleitet werden, wenn der Innendruck entfernt und die Bordwand mit dem Riegel 10 wieder senkrecht steht, so daß der Riegel 10 in einer zweiten Phase eine weitgehend lineare Öffnungsbewegung durchführen kann.

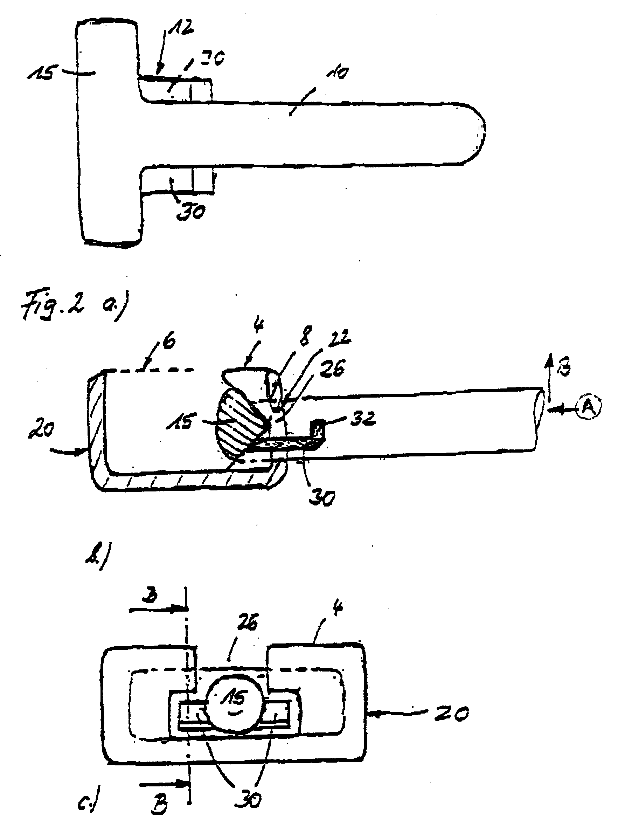

Eine besonders bevorzugte Riegelverschluß-Ausbildung ist in den Figuren 2a bis c dargestellt. Der prinzipielle Aufbau des Gegenhalters 20 und des T-förmigen Riegels 10 entspricht der ersten Ausführungsform. Für identische Merkmale wurden dieselben Bezugszeichen verwendet. Als Rastelemente 12 werden L-förmige Flügel 30 zu beiden Seiten des Riegels 10 verwendet, die horizontal von einer unteren Schenkelfläche eines im Querschnitt keilförmigen oder auch kreisausschnittförmigen Querbalkens 15 bis außerhalb des Gegenhalters 20 verlaufen. Wie bei der Ausführungsform gemäß Fig. 1 sind die Abmessungen der Durchtrittsbereiche 6 in der Deckfläche 4 des Gegenhalters 20 und ebenso die Öffnung 26 in einer Gehäusewand 8 derart gewählt, daß bei normaler Schließ- oder Öffnungsbewegung die L-förmig abgewinkelten Flügel 30 keinerlei Berührungspunkte oder aber Berührungsflächen mit dem Gegenhalter 20 haben. Bei Ladungsdruck gegen eine Bordwand wird die kurze lineare Öffnungsbewegung des Riegels (Pfeil A, Fig. 2b) sofort in eine transversale Riegelbewegung (Pfeil B, Fig. 2b) verändert, wodurch jeweils eine Rastnase 32 an den L-förmigen Flügeln 30 zur Anlage an Wandbereiche der Öffnung 26 kommt, so daß eine sichere Blockierungsstellung des Riegels 10 erreicht ist.

Besonders vorteilhaft ist bei dieser bevorzugten Ausbildungsform des erfindungsgemäßen Riegelverschlusses, daß der Benutzer anhand der Lage der L-förmigen Flügel-Rastelemente 30 deutlich erkennt, daß der Riegelverschluß blockiert ist und eine vollständige Öffnung erst vorgenommen werden kann, nachdem der Druck des Ladungsguts gegen die Bordwand beseitigt worden ist. Eine Gefährdung durch unkontrolliert abklappbare Bordwände ist damit weitgehend vermieden.

## Patentansprüche

1. Riegelverschluß, insbesondere für abklappbare Bordwände von Nutzfahrzeugen, mit einem Gegenhalter (20) und mit einem Riegel (10), der in Schließstellung in und/oder an dem Gegenhalter (20) gehalten ist, und mit einer Blockiereinrichtung, welche die Öffnungsbewegung des Riegels bei Innendruck unterbricht,
dadurch **gekennnzeichnet,**
daß die Blockiereinrichtung Rastelemente (12,30) am Riegel (10) aufweist, die in Verriegelungsposition des Riegels (10) außerhalb des Gegenhalters (20) angeordnet sind,
daß der Riegel (10) aus der Verriegelungsposition linear und transversal in eine Blockierstellung bewegbar ist und
daß in Blockierstellung des Riegels (10) die Rastelemente (12,30) in Wirkverbindung mit der Aussenfläche des Gegenhalters (20) gelangen.

2. Riegelverschluß nach Anspruch 1,
dadurch **gekennzeichnet,**
daß der Riegel (10) T-förmig ausgebildet ist, daß der T-förmige Riegel (10) mit einem Querbalken (15) in einen gehäuseartig ausgebildeten Gegenhalter (20) über einen Durchtrittsbereich (6) einer Deckfläche (4) des Gegenhalters (20) einführbar und in Verriegelungsposition in einer nahezu rechtwinkligen Eckenausbildung (5) des Gegenhalters (20) gehalten ist.

3. Riegelverschluß nach Anspruch 1 oder 2,
dadurch **gekennzeichnet,**
daß am Querbalken (15) eines Riegels (10) L-förmige Flügel (30) als Rastelemente angeformt sind, die beidseitig des Riegels (10) verlaufen und mit dem Riegel (10) in einer Öffnung (26) des Gegenhalters (20) geführt sind, und daß Wandbereiche der Öffnung (26) als Aufnahmen für Rastnasen (32) der Flügel (30) ausgebildet sind.

4. Riegelverschluß nach Anspuch 1 oder 2,
dadurch **gekennzeichnet,**
daß parallel zum Querbalken (15) eines Riegels (10) Rastelemente (12) angeformt sind, die bei linearer Riegelbewegung durch eine komplementäre Öffnung (26) am Gegenhalter (20) führbar sind und daß die Aufnahmen (22) durch die Gehäusewand (8) und Deckflächenbereiche (4) des Gegenhalters (20) gebildet sind.

5. Riegelverschluß nach einem der Ansprüche 2 bis 4,
dadurch **gekennzeichnet,**
daß der Querbalken (15) eines T-förmigen Riegels (10) einen kreisrunden, keilförmigen, quadratischen, trapezförmigen oder vieleckigen Querschnitt aufweist.

6. Riegelverschluß nach einem der vorhergehenden Ansprüche,
dadurch **gekennzeichnet,**
daß der Riegel in einen Riegelstumpf einschraubbar ist.

7. Riegelverschluß nach einem der vorhergehenden Ansprüche,
dadurch **gekennzeichnet,**
daß der Riegelverschluß ein Riegelspannverschluß ist und/oder mit einem Kniehebelgetriebe bewegbar ist.

## Claims

1. Bolt lock, particularly for hinged tail-boards of commercial vehicles, with a bolt receiving device (20) and with a bolt (10), which in the closed position is held in and/or on the bolt receiving device (20), and with a blocking device, which interrupts the opening movement of the bolt in the case of internal pressure,
**characterized** in that
the blocking device has locking elements (12, 30) on the bolt (10), which in the locking position of the bolt (10) are located outside the bolt receiving device (20), that the bolt (10) is movable linearly and transversely into a blocking position from the locking position and that in the blocking position of the bolt (10) the locking elements (12, 30) come into operative connection with the outer face of the bolt receiving device (20).

2. Bolt lock according to claim 1,
**characterized** in that
the bolt (10) is T-shaped, that the T-shaped bolt (10) can be inserted with a cross-bar (15) into a casing-like bolt receiving device (20) by means of an opening area (6) of a top surface (4) of the bolt receiving device (20) and is held in the locking position in a virtually right-angled corner structure (5) of the bolt receiving device (20).

3. Bolt lock according to claim 1 or 2,
**characterized** in that
on the cross-bar (15) of a bolt (10) are shaped as locking elements L-shaped wings (30), which are on either side of the bolt (10) and are guided with the bolt (10) in an opening (26) of the bolt receiving device (20) and that wall areas of the opening (26) are constructed as receivers for detents (32) of the wings (30).

4. Bolt lock according to claim 1 or 2,
**characterized** in that
locking elements (12) are formed parallel to the cross-bar (15) of a bolt (10), wherein these locking elements (12) are in the case of a linear bolt movement guidable through a complimentary opening (26) on the bolt receiving device (20) and that the receivers (22) are formed by the casing wall (8) and the top surface areas (4) of the bolt receiving device (20).

5. Bolt lock according to one of the claims 2 to 4,
**characterized** in that
the cross-bar (15) of a T-shaped bolt (10) has a circular, wedge-shaped, square, trapezoidal or polygonal cross-section.

6. Bolt lock according to one of the preceding claims,
**characterized** in that
the bolt can be screwed into a bolt stub.

7. Bolt lock according to one of the preceding claims,
**characterized** in that
the bolt lock is a bolt toggle fastening and/or is movable with a toggle lever gear.

## Revendications

1. Loquet à verrou, notamment pour ridelles rabattables de véhicules utilitaires, comprenant une gâche (20) et un verrou (10) qui, dans la position de fermeture, est tenu dans et/ou contre la gâche (20), et un dispositif de blocage qui interdit le mouvement d'ouverture du verrou en présence d'une pression intérieure, ***caractérisé en ce que*** le dispositif de blocage présente des éléments d'arrêt (12, 30) prévus sur le verrou (10) et qui sont disposés à l'extérieur de la gâche (20) dans la position de verrouillage du verrou (10) , ***en ce que*** le verrou (10) peut être déplacé de la position de verrouillage à une position de blocage par un mouvement linéaire et transversal, ***et en ce que***, dans la position de blocage du verrou (10), les éléments d'arrêt (12, 30) parviennent en liaison de coopération avec la surface extérieure de la gâche (20).

2. Loquet à verrou selon la Revendication 1, ***caractérisé en ce que*** le verrou (10) est en forme de T, ***en ce qu*****'**une barre transversale (15) du verrou (10) en forme de T peut être engagée dans une gâche (20) en forme de boîte, à travers une zone de passage (6) d'une face de recouvrement (4) de la gâche (20), et le verrou est retenu dans la position de verrouillage dans une formation angulaire (5) de la gâche (20) qui forme un angle à peu près droit.

3. Loquet à verrou selon la Revendication 1 ou 2, ***caractérisé en ce que*** des ailettes (30) en forme de L sont venues de matière sur la barre transversale (15) d'un verrou (10) pour constituer des éléments d'arrêt, ces ailettes s'étendant des deux côtés du verrou (10) et passent, avec le verrou (10), dans une ouverture (26) de la gâche (20), et en ce que des zones de la paroi de l'ouverture (26) forment des logements pour recevoir des dents de verrouillage (32) des ailettes (30).

4. Loquet à verrou selon la Revendication 1 ou 2, ***caractérisé en ce que*** des éléments d'arrêt (12) sont venus de matière parallèlement à la barre transversale (15) d'un verrou (10), et qu'on peut les faire passer à travers une ouverture complémentaire (26) de la gâche (20) par un déplacement linéaire du verrou et en ce que les logements (22) sont formés par la paroi (8) de boîtier et par des régions (4) de la face de recouvrement de la gâche (20).

5. Loquet à verrou selon une des Revendications 2 à 4, ***caractérisé en ce que*** la barre transversale (15) d'un verrou (10) en forme de T présente une section circulaire, en coin, carrée, trapézoëdale ou polygonale.

6. Loquet à verrou selon une des Revendications précédentes, ***caractérisé en ce que*** le verrou peut être vissé dans un moignon de verrou.

7. Loquet à verrou selon une des Revendications précédentes, ***caractérisé en ce que*** le loquet à verrou est un loquet à verrou à genouillère et/ou peut être manoeuvré au moyen d'un mécanisme de genouillère.
